# EUROPEAN PATENT SPECIFICATION

(11) **EP 0 870 127 B1**
(45) Date of publication and mention of the grant of the patent: **14.03.2001**
(21) Application number: 96913564.9
(22) Date of filing: 13.05.1996
(51) Int. Cl.: F16H 3/72

(54) **ROTATIONAL SPEED CONVERTER**
DREHZAHLWANDLER
CONVERTISSEUR DE VITESSE DE ROTATION

(30) Priority: 12.05.1995 FI 952310
(43) Date of publication of application: 14.10.1998
(73) Proprietor: DIAMONT MACHINE OY, 83500 Outokumpu (FI); Kovalainen, Paavo, 80130 Joensuu (FI); Vatanen, Toivo, 80260 Joensuu (FI)
(72) Inventor: MONTONEN, Mauno, FIN-83500 Outokumpu (FI)
(74) Representative: Pitkänen, Hannu Alpo Antero
(86) International application number: FI9600267
(87) International publication number: WO9635889

(56) References cited:
- DE-A- 1 500 413
- US-A- 4 867 012
- US-A- 4 974 471

## Description

The present invention is related to a rotational speed converter comprising shafts with bevelled gears fixed thereon, separate bevelled gears which cooperate with said gears fixed onto said shafts and are mounted on a separate shaft, a planetary gear connected to said separate shaft, and at least one braking gear acting on said planetary gear.

Conventionally, one of the greatest problems in rotational speed conversion and transmission techniques is to provide as stepless and smooth variable-speed conversion as possible. Normally, rotational speed conversion from one shaft to another takes place using a gear box. A conventional gear box comprises a set of predetermined gears wheels and combinations thereof. Such arrangements do not offer a really stepless variable-speed conversion, no matter how small steps are used. Another conventional method of rotational speed conversion is to transmit power between the input and output shafts by means of different chain sprockets and belt pulleys and combinations thereof. However, also such arrangements operate in given steps based on entirely mechanical couplings.

Such prior-art rotational speed converters have in common that the smaller steps of speed conversion are desired, the greater number of elements are required and the higher will be the cost of the system. While electric conversion techniques offer stepless and smooth approaches to speed conversion, the number of applications is limited to certain types of drives only. Moreover, contemporary electric conversion systems are hampered by their large size and complicated construction involving a great number of elements and components.

It is an object of the present invention to provide a rotational speed converter capable of overcoming the drawbacks of conventional speed conversion equipment. It is a particular object of the invention to provide a rotational speed converter offering a stepless method of rotational speed conversion. It is still a further object of the invention to provide a rotational speed converter featuring a simple and compact construction as compared with conventional equipment combined with a low manufacturing cost.

The goal of the invention is achieved by virtue of a rotational speed converter characterized in the annexed claims.

In the rotational speed converter according to the invention, to the braking gear are connected fluid flow channels, whereby the fluid volume surrounding said channels is filled with a hydraulic fluid that is arranged to pass through the gaps formed between teeth of the braking gear and the planetary gear from the suction side to the pressure side. Additionally, the converter incorporates a control valve for adjusting the fluid flow from the pressure side to the suction side, whereby the hydraulic system thus formed makes it possible to control the fluid flow rate to vary the fluid pressure on the pressure side thus permitting braking of the braking gear and the rotational speed of the planetary gear in a desired ratio, whereby a stepless conversion ratio from zero to 1:1 between the input and output shaft speeds is attained. The greatest benefits thus obtained over conventional techniques are a simple construction, high reliability in service and small number of components required. An additionally important advantage is the small size of the converter as compared to its large conversion range. Varied applications of the invention can be found in almost all sectors of technology.

In a preferred embodiment of the invention, the case of the converter forms the space holding the hydraulic fluid circulating between the planetary gear and the braking gear. Such a construction is easy to manufacture and maintain.

In the following, the construction and specific operating principle of the invention will be examined in more detail with reference to the attached drawing in which
Figure 1 is a top view of a converter according to the invention with the top cover removed; and
Figure 2 is a sectional view along the plane A-A marked in Fig. 1 illustrating the elements related to the function of the converter.

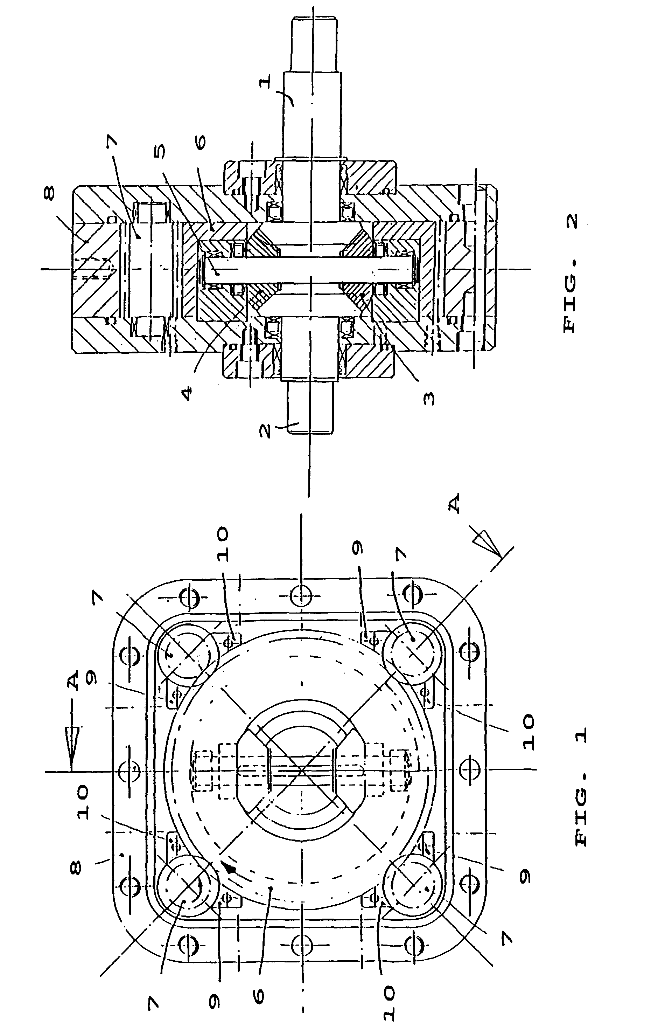

Referring to the Figs. 1 and 2, the embodiment of a rotational speed converter shown therein comprises a case 8 having a first shaft 1 and a second shaft 2 partially enclosed by the case, with bevelled gears mounted to the inner ends of said shafts in a fixed manner, separate bevelled gears 3, 4 placed in the space between said shafts with a separate shaft 5 attached to said separate gears, a planetary gear 6 connected to said separate shaft, and braking gears 7. While the number of the braking gears may be varied according to the application, the embodiment shown herein uses four separate braking gears placed symmetrically about the planetary gear. To the braking gears are connected fluid flow channels 9, 10 having the space surrounding them filled with a hydraulic fluid. Any type of suitable fluid can be used herein such as hydraulic oil.

When the braking gears are kept stalled, the separate bevelled gears 3, 4 are arranged to transmit the input speed of the first shaft 1 directly in ratio 1:1 to the second shaft 2. Hence, by applying torque to the input shaft 1 to rotate the shaft, the locking of the braking gears 7 causes the torque to be transmitted via the bevelled gears 3 and 4 directly to the output shaft 2. Here, the transmission ratio is exactly 1:1.

In the case that the output shaft 2 is kept stalled by an external load and the braking gears 7 are unlocked, the planetary gear 6 is forced to rotate with the rotation of the input shaft 1. This motion is caused by the fact that the bevelled gears 3 and 4 are connected via the separate shaft 5 to the planetary gear 6. Because the output shaft 2 is stalled, the planetary gear 6 is forced to rotate. Here, the rotational speed of the output shaft 2 is zero.

With the planetary gear 6 arranged to rotate clockwise as marked by an arrow in Fig. 2, the fluid flow channels are divided into a suction-side channel 10 and a pressure-side channel 9. The planetary gear 6 and the braking gears 7 act as a gear pump transferring hydraulic oil in their tooth gaps from the suction-side channel 10 to the pressure-side channel 9. The case 8 acts as both a support of the gears and a hydraulic oil space. The end clearances of the gears are appropriately designed to permit the rotation of the gears while simultaneously preventing the hydraulic oil from escaping via the clearances and the plays against the case from the spaces of the pressure side 9 to the suction side 10.

Braking is accomplished by means of a conventional hydraulic control valve (not shown), which is mounted external to the case of the converter and serves to adjust in a conventional manner the flow of the hydraulic oil from the pressure-side spaces 9 to the suction-side spaces 10. As soon as the oil space provided by the pressure-side spaces 9 becomes filled with the hydraulic oil and the flow of the oil to the suction-side spaces 10 is cut off, the motion of the braking gears 7 and the planetary gear 6 is stalled, because the available oil space is filled with incompressible hydraulic oil. At this stage, the external load stalling the output shaft 2 can be reduced, whereby the rotational speed of the shaft 2 starts to increase steplessly. Thus, the rotational speed of the input shaft 1 is transmitted to the output shaft 2 in a desired reduction varying from zero to 1:1.

Accordingly, the invention is applicable for use as a rotational speed converter in, e.g., lift machinery, where it also finds use as a brake.

As the function of the rotational speed converter may be inverted, it can also be used as a brake permitting "soft-stopping" of a rotational motion. Moreover, the converter may additionally provide a free-wheeling mode in a situation not requiring power transmission through the converter. Further applications can be found in vehicle technology and in combination with electric motors and other power sources.

## Claims

1. A rotational speed converter comprising shafts (1, 2) with bevelled gears fixed thereon, separate bevelled gears (3, 4) which cooperate with said gears fixed onto said shafts and are mounted on a separate shaft (5), a planetary gear (6) connected to said separate shaft, and at least one braking gear (7) acting on said planetary gear, **characterized** in that to the braking gear (7) are connected fluid flow channels (9, 10), whereby the fluid volume surrounding said channels is filled with a hydraulic fluid that is arranged to pass through the gaps formed between teeth of the braking gear (7) and the planetary gear (6) from the suction side to the pressure side, and that the converter additionally incorporates a control valve for adjusting the fluid flow from the pressure side (9) to the suction side (10), whereby the hydraulic system thus formed makes it possible to control the fluid pressure on the pressure side thus permitting braking of the braking gear and the rotational speed of the planetary gear in a desired ratio, whereby a stepless conversion ratio from zero to 1:1 between the speeds of the input shaft (1) and output shaft (2) is attained.

2. A rotational speed converter as defined in claim 1, said converter incorporating a case (8) for said elements, **characterized** in that said case (8) forms the space holding the hydraulic fluid circulating between the planetary gear and the braking gear.

3. A rotational speed converter as defined in claim 1 or 2, **characterized** in that said separate bevelled gears (3, 4) are located between said shafts (1, 2) and are arranged to transmit the input speed of the first shaft (1) directly in ratio 1:1 to the second shaft (2) when the braking gear is kept stalled.

## Patentansprüche

1. Ein Drehzahlwandler, wozu Schäfte (1, 2) gehören, an die abgeschrägte Wechsel befestigt sind, gesonderte abgeschrägte Wechsel (3, 4), die zusammen mit den erwähnten, an den Schäften befestigten Wechseln arbeiten und die an einem gesonderten Schaft (5) angebracht worden sind, ein Umlaufwerk (6), das mit dem erwähnten gesonderten Schaft verbunden ist, und wenigstens ein abbremsender Wechsel (7), der auf das erwähnte Umlaufwerk wirkt, dadurch **gekennzeichnet**, dass zu dem abbremsenden Wechsel (7) Strömungskanäle (9, 10) für eine Flüssigkeit verbunden sind, wobei der von den erwähnten Kanälen umgegebene Flüssigkeitsraum mit einer Hydraulikflüssigkeit gefüllt wird, die durch die Spalten gebildeten zwischen den Zähnen des abbremsenden Wechsels (7) und des Umlaufwerks (6) aus der Saugseite zu der Druckseite zu fliessen angeordnet worden ist, und dass zu dem Konverter dazu noch ein Regulierventil für die Regulierung des Flüssigkeitsdurchflusses aus der Druckseite (9) zu der Saugseite (10) gehört, wobei das so gebildete Hydrauliksystem die Kontrolle des Flüssigkeitsdrucks auf der Druckseite möglich macht und dadurch das Bremsen mit dem abbremsenden Wechsel und die Umlaufgeschwindigkeit des Umlaufwerks in einem gewünschten Verhältnis erlaubt, wodurch ein stufenloses Übersetzungsverhältnis aus dem Wert Null bis zum Verhältnis 1:1 zwischen den Geschwindigkeiten des Eingangsschaftes (1) und des Ausgabeschaftes (2) erreicht worden ist.

2. Ein Drehzahlwandler nach dem Patentanspruch 1, welcher erwähnte Konverter einschliesslich ein Gehäuse (8) für die gesagten Elemente ist, dadurch **gekennzeichnet**, dass das erwähnte Gehäuse (8) einen Raum einschliessend die Hydraulikflüssigkeit bildet, die zwischen dem Umlaufwerk und dem abbremsenden Wechsel zirkuliert.

3. Ein Drehzahlwandler nach dem Patentanspruch 1 oder 2, dadurch **gekennzeichnet**, dass die erwähnten gesonderten beschrägten Wechseln (3, 4) zwischen den erwähnten Schäften (1, 2) eingeräumt worden sind, und zum Wechseln von der einkommenden Geschwindigkeit des ersten Schaftes (1) direkt in dem Verhältnis 1:1 zu dem zweiten Schaft (2) angeordnet sind, wenn der abbremsende Wechsel ausgeschaltet gehalten worden ist.

## Revendications

1. Un convertisseur de vitesse de rotation comprenant des axes (1, 2) avec des engrenages fixés sur ceux-ci, des engrenages coniques séparés (3, 4) qui fonctionnent ensemble avec lesdits engrenages fixés sur lesdits axes et qui sont montés sur un axe séparé (5), un engrenage planétaire (6) connecté audit axe séparé et au moins un engrenage de freinage (7) agissant sur ledit engrenage planétaire, **caractérisé** en ce que des canaux d'écoulement fluide (9, 10) sont branchés sur l'engrenage de freinage au moyen de quoi le volume du fluide entourant lesdits canaux est rempli d'un fluide hydraulique qui est arrangé pour passer par les espaces formés entre les dents de l'engrenage de freinage (7) et de l'engrenage planétaire (6), du côté d'aspiration au côté de refoulement et que le convertisseur comprend en outre un distributeur de commande pour la régulation de l'écoulement du fluide du côté de pression (9) au côté d'aspiration (10), par quoi, grâce au système hydaulique ainsi formé, il est possible de régler la pression du fluide du côté de pression, permettant ainsi le freinage de l'engrenage de freinage et la vitesse de rotation de l'engrenage planétaire dans une proportion souhaitée, ce qui permet d'atteindre une proportion de conversion continue de zéro à 1:1 entre les vitesses de l'axe d'entrée (1) et de l'axe de sortie (2).

2. Un convertisseur de vitesse de rotation selon la revendication 1, comprenant un boîtier (8) pour lesdits éléments, **caractérisé** en ce que ledit boîtier (8) forme l'espace contenant le fluide hydraulique circulant entre l'engrenage planétaire et l'engrenage de freinage.

3. Un convertisseur de vitesse de rotation selon la revendication 1 ou 2, **caractérisé** en ce que lesdits engrenages coniques (3, 4) sont placés entre lesdits axes (1, 2) et qu'ils sont arrangés pour transmettre la vitesse d'entrée du premier axe (1) directement dans la proportion de 1:1 au deuxième axe (2), lorsque l'engrenage de freinage est maintenu desserré.
